# EUROPÄISCHE PATENTSCHRIFT

(11) **EP 3 889 476 B1**
(45) Veröffentlichungstag und Bekanntmachung des Hinweises auf die Patenterteilung: **29.11.2023**
(21) Anmeldenummer: 21156476.0
(22) Anmeldetag: 11.02.2021
(51) Int. Cl.: F16K 1/42, F16K 1/44, F16K 31/06, F16K 15/18, F16K 31/40, B60H 1/00

(54) **VENTILANORDNUNG UND SCHALTVENTIL ZUR REGELUNG EINES MASSENSTROMES**
VALVE ASSEMBLY AND SWITCHING VALVE FOR CONTROLLING A MASS FLOW
AGENCEMENT DE SOUPAPE ET SOUPAPE DE COMMUTATION DESTINÉE À LA RÉGULATION D'UN FLUX MASSIQUE

(30) Priorität: 30.03.2020 DE 102020108762
(43) Veröffentlichungstag der Anmeldung: 06.10.2021
(73) Patentinhaber: Otto Egelhof GmbH & Co. KG, 70736 Fellbach (DE)
(72) Erfinder: Willers, Eike, Dr., 70469 Stuttgart (DE); Auweder, Andreas, 71665 Vaihingen (DE); Lang-Belz, Markus, 70736 Fellbach (DE)
(74) Vertreter: Mammel und Maser Patentanwälte PartG mbB

(56) Entgegenhaltungen:
- WO-A1-2018/219527
- WO-A1-2018/228746
- DE-A1- 19 917 756
- DE-A1-102010 039 127
- KR-U- 20110 003 420
- US-A- 4 228 987
- US-A1- 2006 071 193

## Beschreibung

Die Erfindung betrifft eine Ventilanordnung und ein Schaltventil mit einer solchen Ventilanordnung zur Regelung eines Massenstromes in einem Kälte- oder Wärmekreislauf.

Aus der DE 10 2013 107 060 A1 ist ein Schaltventil zur Regelung eines Massenstromes in einem Kälte- oder Wärmekreislauf bekannt. Dieses Schaltventil umfasst ein Ventilgehäuse, welches eine Zuführöffnung und eine Abführöffnung umfasst. An einem Ventilkolben ist ein Ventilschließglied vorgesehen, das in einer Schließposition an einem zwischen der Zuführöffnung und der Abführöffnung angeordneten Ventilsitz in einer Schließposition anliegt. Dem Ventilschließglied gegenüberliegend ist ein Pilotventil vorgesehen, welches im Ventilkolben eine Pilotbohrung aufweist, welche in die Durchgangsbohrung mündet und den Ventilkolben durchquert. Zur Ansteuerung des Ventilkolbens ist eine Wegerzeugungseinrichtung vorgesehen, welche einen betätigbaren Stößel aufweist, der einen die Pilotbohrung schließenden Schließkörper aufnimmt und mit dem Schließkörper die Pilotbohrung freigebende Öffnungsposition überführbar ist.

Des Weiteren ist im Ventilgehäuse zwischen der Zuführöffnung und der Pilotbohrung ein Bypasskanal ausgebildet. Bei einem Schaltventil liegt ein am Ventilschließglied angeordnetes Dichtelement im Ventilsitz an, wobei eine Schließkraft einer am Schließkörper angreifenden Schließfeder vollständig auf das Dichtelement zur abdichtenden Anordnung übertragen wird.

Aus der KR 2011 0003420 U1 ist eine Ventilanordnung für ein Schaltventil zur Regelung eines Massenstromes in einem Kälte- oder Wärmekreislauf bekannt. Ein Ventilsitz umfasst eine Anschlagfläche und eine Dichtfläche. Ein an dem Ventilsitz anliegendes Ventilschließglied umfasst eine Abstützfläche und eine Abdichtfläche, weil in einer Schließposition die Abstützfläche des Ventilschließgliedes und die Anschlagsfläche des Ventilsitzes aneinander anliegen und eine Wegbegrenzung bilden.

Eine analoge Ventilanordnung ist aus der US 4 228 987 A, der DE 10 2010 039127 A1 sowie der WO 2018/228 746 A1 bekannt.

Der Erfindung liegt die Aufgabe zugrunde, eine Ventilanordnung sowie ein Schaltventil mit einer solchen Ventilanordnung vorzuschlagen, welche unter Beibehaltung der Dichtwirkung eine erhöhte Lebensdauer, insbesondere auch beim Einsatz von verschiedenen Medien, ermöglicht.

Diese Aufgabe wird durch eine Ventilanordnung gelöst, bei welcher der Ventilsitz eine Anschlagfläche und eine Dichtfläche aufweist, die benachbart zueinander ausgerichtet sind sowie das Ventilschließglied eine Abstützfläche und eine benachbart dazu angeordnete Abdichtfläche aufweist, wobei am Ventilschließglied ein elastisches Dichtelement vorgesehen ist, an welchem die Abdichtfläche ausgebildet ist und die Dichtfläche einen Dichtvorsprung umfasst, die zur gegenüberliegenden Abdichtfläche ausgerichtet ist und wobei die Abstützfläche des Ventilschließgliedes und die Anschlagfläche des Ventilsitzes in einer Schließposition des Ventilschließgliedes im Ventilsitz aneinander anliegen und eine Wegbegrenzung zwischen dem Ventilschließglied und dem Ventilsitz bilden, wobei der Dichtvorsprung zumindest teilweise in das Dichtelement eingepresst ist. Diese Ventilanordnung ermöglicht, dass in einer Schließposition des Ventilschließgliedes zum Ventilsitz eine Kraftentlastung auf das elastische Dichtelement wirkt, da die Abstützfläche und die Anschlagfläche in der Schließposition fest aneinander liegen, sodass die Schließkraft des Ventilschließglieds nicht in vollem Umfang auf die Dichtung wirkt. Gleichzeitig kann durch die Ausgestaltung des Dichtvorsprunges eine hinreichende Abdichtung durch einen Formschluss zwischen dem Dichtvorsprung und der gegenüberliegenden Fläche - also der Dichtfläche oder der Anschlagfläche - gegeben sein. Diese formschlüssige Abdichtung ist sowohl für den Fall möglich, dass der Dichtvorsprung am elastischen Dichtelement vorgesehen ist und an einer gegenüberliegenden Dichtfläche oder Abdichtfläche anliegt, sodass das hervorstehende Volumen des Dichtvorsprunges in das Dichtelement eingepresst wird. Diese formschlüssige Abdichtung ist auch dann gegeben, sofern der Dichtvorsprung an der Anschlagfläche oder Abstützfläche vorgesehen ist und in das elastische Dichtelement zumindest teilweise eingepresst wird, sodass durch den gegenüber dem elastischen Dichtelement fest ausgebildeten Dichtvorsprung an der Anschlagfläche oder der Abstützfläche ein Volumen im Umfang des Dichtvorsprungs im elastischen Dichtelement verdrängt wird.

Diese Ventilanordnung ist bevorzugt für ein NC (Normally Closed)-Schaltventil als auch für ein NO (Normally Open)-Schaltventil einsetzbar. Bei einem NC-Schaltventil ist in einer Ausgangsposition das Ventilschließglied in einer Schließposition zum Ventilsitz angeordnet. Bei einem NO-Schaltventil ist das Ventilschließglied in einer Ausgangsposition gegenüber dem Ventilsitz abgehoben.

Der Ventilkolben der Ventilanordnung weist einen Ventilkörper auf, an dem das Dichtelement mit einer Dichthülse zum Ventilkörper befestigt ist. Dadurch kann in einfacher Weise das Dichtelement zum Ventilkörper gehalten werden. Zudem können verschiedene Geometrien des Dichtelementes in einfacher Weise eingesetzt werden.

Beim Ventilkolben, der vorzugsweise aus dem Ventilkörper und der daran befestigten Dichthülse aufgebaut ist, kann eine Stirnseite der Dichthülse die Abstützfläche bilden, welche für eine Wegbegrenzung des Ventilschließgliedes in der Schließposition zum Ventilsitz vorgesehen ist. Alternativ kann vorgesehen sein, dass an einer zum Ventilsitz weisenden Stirnseite des Ventilkörpers die Abstützfläche vorgesehen ist.

Vorteilhafterweise ist zwischen dem Ventilkörper und der Dichthülse ein Aufnahmevolumen für das elastische Dichtelement ausgebildet, wobei das in das Aufnahmevolumen eingesetzte Dichtelement im Volumen kleiner als der Aufnahmeraum ist. Dadurch ist das Aufnahmevolumen durch das Dichtelement nicht vollständig ausgefüllt. Dies weist den Vorteil auf, dass bei einem Quellen des Dichtelementes oder bei einer Volumenvergrößerung des Dichtelements, beispielsweise durch Temperatur und/
oder Druck, das Dichtelement im Aufnahmevolumen sich ausdehnen kann und die Dichtfläche beziehungsweise Abdichtfläche unbeeinflusst bleibt.

Vorteilhafterweise ist vorgesehen, dass die am Ventilkörper angeordnete Dichthülse, welche den Ventilkörper zumindest abschnittsweise außen umgreift, an einer Stirnseite einen radial nach innen vorstehenden Ringbund aufweist, welcher an einem Außenumfang des Dichtelementes angreift und dieses im Aufnahmevolumen zum Ventilkörper fixiert. Alternativ kann die Dichthülse, welche in den Ventilkörper einsteckbar ist, an einer Stirnseite einen radial nach außen vorstehenden Ringbund aufweisen, welcher an einem Innenumfang des Dichtelements angreift und dieses im Aufnahmevolumen zum Ventilkörper fixiert. Die erste Alternative ist bevorzugt bei kleineren Durchmessern der Durchgangsbohrung der Ventile vorgesehen. Die zweite Alternative ist bevorzugt für größere Durchgangsbohrungen des Ventils vorgesehen, bei welcher bevorzugt auch größere Dichtungsdurchmesser benötigt werden. In beiden Fällen ist eine einfache Montage des Dichtelementes zum Ventilkörper zusammen mit der Dichthülse ermöglicht.

Vorteilhafterweise ist vorgesehen, dass das Dichtelement durch den Ringbund der Dichthülse in einer Richtung, vorzugsweise in axialer Richtung des Ventilkörpers, form- und/oder kraftschlüssig, insbesondere fest verpresst, gehalten ist und in einer weiteren Richtung, vorzugsweise in radialer Richtung, ein Freiraum im Aufnahmevolumen verbleibt. Dadurch sind im Hinblick auf die Öffnungs- und Schließbewegung zur abdichtenden Anordnung definierte Verhältnisse in der Schließposition des Ventilschließgliedes zum Ventilsitz gegeben, wohingegen in radialer Richtung das Dichtelement sich gegebenenfalls ausdehnen kann.

Vorteilhafterweise ist vorgesehen, dass der Dichtvorsprung als eine umlaufende Wulst ausgebildet ist, welche am Dichtelement oder an der Dichthülse beziehungsweise Ventilschließglied oder am Ventilsitz vorgesehen ist. Eine solche radial umlaufende Wulst ist in der Geometrie einfach herzustellen und kann eine hinreichende Abdichtung ausbilden.

Gemäß einer alternativen Ausführungsform der Ventilanordnung sind der Ventilkörper des Ventilkolbens und das Dichtelement als ein Zwei-Komponenten-Spritzgussteil hergestellt. Diese Ausgestaltung ermöglicht, dass in einem Arbeitsgang ein Ventilkolben für eine Ventilanordnung herstellbar ist. Bei dieser Ausführungsform kann eine zusätzliche Montage einer Dichthülse zur Fixierung des Dichtelementes am Ventilkörper entfallen. Des Weiteren kann alternativ zur Ausführungsform des Ventilkörpers und des Dichtelementes als Zwei-Komponenten-Spritzgussteil das Dichtelement durch eine Klebe- und/oder Pressverbindung mit dem Ventilkolben verbunden werden. Durch diese Klebe- und/oder Pressverbindung kann auch ein Teil des Dichtelementes einen Abschnitt des Ventilkolbens zur besseren Fixierung hintergreifen.

Nach einer ersten alternativen Ausführungsform der Ventilanordnung ist vorgesehen, dass der Dichtvorsprung am Ventilsitz angeordnet ist und in Hubrichtung des Ventilschließgliedes gegenüber der Anschlagfläche am Ventilsitz hervorsteht. Dieser Dichtvorsprung an der Dichtfläche und die Anschlagfläche sind vorteilhafterweise aus einem Material ausgebildet und einer Durchgangsöffnung zugeordnet, an der der Ventilsitz ausgebildet ist.

Alternativ kann vorgesehen sein, dass der Dichtvorsprung am elastischen Dichtelement vorgesehen ist, welches vorzugsweise am Ventilschließglied angeordnet ist und in Richtung auf eine Dichtfläche am Ventilsitz weist, die an die Anschlagfläche angrenzt. In diesem Fall können die Dichtfläche und die Anschlagfläche in einer Ebene liegen.

Vorteilhafterweise ist vorgesehen, dass der Dichtvorsprung gegenüber der benachbarten Anschlagfläche oder Abstützfläche vorzugsweise zwischen 0,05 mm und 0,5 mm hervorsteht.

Bei der vorteilhaften Ausführungsform der Ventilanordnung, bei der der Ventilsitz die Anschlagfläche und benachbart dazu die Dichtfläche mit dem Dichtvorsprung aufweist und dem Dichtvorsprung gegenüberliegend das elastische Dichtelement am Ventilschließglied vorgesehen ist, kann bei Anordnung des Ventilschließgliedes in einer Schließposition zum Ventilsitz der Dichtvorsprung im Dichtelement ein Volumen von 1 % bis 30 % des Dichtelementes verdrängen. Dadurch kann eine hinreichende Abdichtung oder eine elastische Verformung des Dichtelementes ermöglicht sein.

Des Weiteren ist bevorzugt vorgesehen, dass der Dichtvorsprung, der an der Dichtfläche des Ventilsitzes vorgesehen ist, bei einer Durchgangsöffnung mit einem Durchmesser von 1 mm bis 40 mm vorgesehen ist.

Eine weitere bevorzugte Ausgestaltung der Ventilanordnung sieht vor, dass dem Ventilschließglied des Ventilkolbens gegenüberliegend ein Pilotventil vorgesehen ist. Dieses Pilotventil weist eine Pilotbohrung im Ventilkörper des Ventilkolbens auf, die den Ventilkörper durchquert und in die Durchgangsbohrung mündet. Des Weiteren ist eine Wegerzeugungseinrichtung vorgesehen, welche einen betätigbaren Stößel aufweist, der einen die Pilotbohrung schließenden Schließkörper aufnimmt und mit dem Schließkörper in eine die Pilotbohrung freigebende Öffnungsposition überführbar ist. Zwischen der Zuführöffnung und der Pilotbohrung ist bevorzugt ein Bypasskanal ausgebildet. Diese Ventilanordnung kann somit nicht nur bei einem Schaltventil, sondern auch bei einem Ventil mit einem Pilotventil vorgesehen sein.

Bevorzugt ist vorgesehen, dass die Dichthülse auf den Ventilkörper aufgepresst oder aufgeklebt oder nach dem Positionieren der Dichthülse zum Ventilkörper zumindest teilweise stoffschlüssig verbunden ist. Dies ermöglicht eine einfache Montage der Dichthülse zum Ventilkörper unter Einbindung des Dichtelementes.

Die an dem Ventilkörper befestigte Dichthülse weist eine radial nach außen gerichtete Schulter auf, an der ein Rückstellelement angreift, welches zwischen dem Ventilsitz und dem Ventilkolben geführt ist. Diese Schulter ist insbesondere bei der Ausgestaltung des Ventilkolbens als Pilotventil vorgesehen, wodurch eine Öffnungsbewegung des Ventilkolbens zum Ventilsitz begrenzt ist.

Bevorzugt ist vorgesehen, dass zwischen einem Außenumfang der am Ventilkörper angeordneten Dichthülse und einer Führungsbuchse des Stößels der Bypasskanal durch eine Spielpassung zwischen der Dichthülse und der Führungsbuchse gebildet ist oder dass zumindest am Außenumfang der Dichthülse eine Abflachung oder eine Längsrillung ausgebildet ist. Dadurch kann in konstruktiv einfacher Weise eine Führung des Ventilkolbens in der Führungsbuchse des Stößels ermöglicht sein und gleichzeitig für die Funktion des Pilotventils ein Bypasskanal ausgebildet sein, durch welche das Medium zur Pilotventilbohrung gelangen kann.

Eine weitere bevorzugte Ausgestaltung des Ventilkolbens sieht vor, dass die Dichthülse mit dem Ventilkörper in einem Bereich verpresst ist, der innerhalb der radial nach außenstehenden Schulter liegt. Durch diese radial außen umlaufende Schulter kann in dem Bereich, der sich in axialer Richtung gesehen über die Breite der Schulter erstreckt, eine erhöhte Kraft erzielt werden, um an dem Ventilkörper anzugreifen. In einem weiteren Bereich in axialer Richtung, der entgegengesetzt zum Ventilschließglied sich erstreckt, kann zwischen der Dichthülse und dem Ventilkörper ein kleiner Ringspalt ausgebildet sein. Bevorzugt ist vorgesehen, dass an einem Außenumfang des Ventilkörpers eine Rändelung, insbesondere Längsrändelung, vorgesehen ist. Dies ermöglicht eine Vereinfachung in der Verpressung der Dichthülse zum Ventilkörper.

Des Weiteren ist bevorzugt vorgesehen, dass der Ventilkörper einen zur Pilotbohrung ausgerichteten Pilotventilsitz aus einem Kunststoffmaterial, insbesondere Teflon, aufweist, der vorzugsweise als Ring in den Ventilkörper eingepresst ist. Dadurch kann des Weiteren ermöglicht werden, dass die Leckagerate verringert wird. Zudem kann eine Minimierung von Schaltgeräuschen erzielt werden.

Die der Erfindung zugrundeliegende Aufgabe wird des Weiteren durch ein Schaltventil zur Regelung eines Massenstromes in einem Kälte- oder Wärmekreislauf gelöst, welches ein Ventilgehäuse mit einer Zuführöffnung oder einer Abführöffnung aufweist sowie einen Ventilkolben, welcher ein zur Abführöffnung weisendes Ventilschließglied aufweist, das in einer Schließposition an einem an einer Durchgangsbohrung zwischen der Zuführöffnung und der Abführöffnung angeordneten Ventilsitz in einer Schließposition anliegt, wobei das Schaltventil eine Ventilanordnung nach einem der vorhergehenden Ausführungsformen umfasst.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
Figur 1 eine schematische Schnittansicht eines erfindungsgemäßen Schaltventils,
Figur 2 eine schematisch vergrößerte Ansicht einer Ventilanordnung des Schaltventils gemäß Figur 1 in einer Öffnungsposition,
Figur 3 eine schematisch vergrößerte Ansicht der Ventilanordnung gemäß Figur 2 in einer Schließphase,
Figur 4 eine schematisch vergrößerte Ansicht der Ventilanordnung gemäß Figur 2 in einer Schließposition,
Figur 5 eine schematisch vergrößerte Ansicht eines Ventilkolbens gemäß einer alternativen nicht zur Erfindung gehörigen Ausführungsform zu den Figuren 1 bis 4,
Figur 6 eine perspektivische Ansicht einer alternativen nicht zur Erfindung gehörigen Ausführungsform des Schaltventils zu Figur 1,
Figur 7 eine schematische Schnittansicht des Schaltventils gemäß Figur 6 in einer Schließstellung,
Figur 8 eine schematische Schnittansicht des Schaltventils gemäß Figur 6 in einer Öffnungsstellung,
Figur 9 eine schematisch vergrößerte Schnittansicht der Ventilanordnung gemäß Figur 7 in der Schließposition,
Figur 10 eine schematisch vergrößerte Schnittansicht der Ventilanordnung gemäß Figur 8 in einer Öffnungsposition,
Figur 11 eine schematisch vergrößerte Schnittansicht einer alternativen nicht zur Erfindung gehörigen Ausführungsform der Ventilanordnung zu Figur 9 in einer Schließposition,
Figur 12 eine schematische Schnittansicht der Ventilanordnung gemäß Figur 11 in einer Öffnungsposition,
Figur 13 eine schematisch vergrößerte Schnittansicht einer alternativen Ausführungsform der Ventilanordnung gemäß Figur 9 in einer Schließposition,
Figur 14 eine schematisch vergrößerte Schnittansicht der Ventilanordnung gemäß Figur 13 in einer Öffnungsposition,
Figur 15 eine schematisch vergrößerte Schnittansicht einer alternativen nicht zur Erfindung gehörigen Ausführungsform der Ventilanordnung zu Figur 13 in einer Schließposition, und
Figur 16 eine schematisch vergrößerte Schnittansicht der Ventilanordnung gemäß Figur 15 in einer Öffnungsposition.

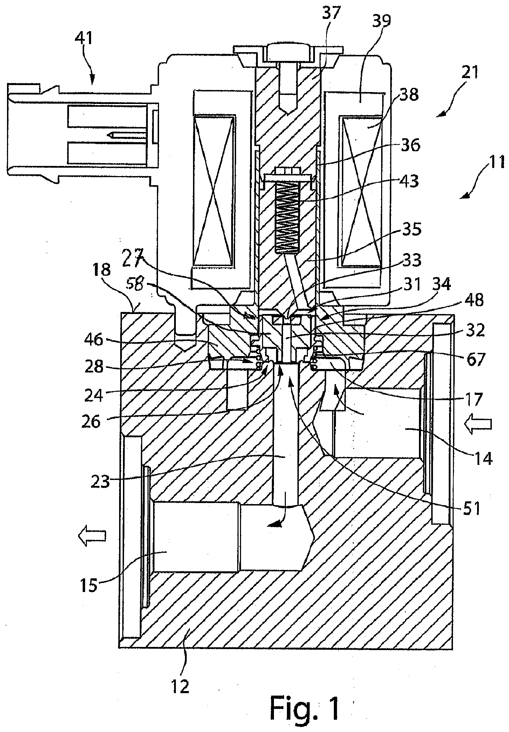

In Figur 1 ist eine schematische Schnittansicht einer ersten Ausführungsform eines erfindungsgemäßen Schaltventils 11 dargestellt. Dieses Schaltventil 11 umfasst ein Ventilgehäuse 12 mit einer Zuführöffnung 14 für einen Massenstrom, insbesondere ein Kältemittel sowie eine Abführöffnung 15 sowie eine die Zuführöffnung 14 und die Abführöffnung 15 verbindende Kammer 17 oder einen Kältemittelkanal. Die Zuführöffnung 14 und Abführöffnung 15 weisen jeweils Anschlüsse für Versorgungsleitungen oder weitere Komponenten auf.

Die Kammer 17 im Ventilgehäuse 12 ist zu einer Gehäuseseite 18 hin offen ausgebildet, an welcher eine Wegerzeugungseinrichtung 21 lösbar befestigt ist. Die Kammer 17 geht in eine Durchgangsbohrung 23 über, welche von einem Ventilsitz 24 umgeben ist, an welchem ein Ventilschließglied 26 eines Ventilkolbens 27 in einer Schließposition 28 anliegt.

Der Ventilkolben 27 weist an seinem dem Ventilschließglied 26 gegenüberliegenden Ende eine Pilotbohrung 32 auf, welche mit einem Schließkörper 33 verschließbar ist. Die Pilotbohrung 32 und der Schließkörper 33 bilden ein Pilotventil 31. Dieser Schließkörper 33 ist an einem Stößel 35 fest angeordnet, welcher durch die Wegerzeugungseinrichtung 21 auf und ab beziehungsweise hin und her bewegbar ist.

Die Wegerzeugungseinrichtung 21 umfasst gemäß diesem Ausführungsbeispiel ein Ankerrohr 36, welchem ein Kern 37 zugeordnet ist. Eine Spule 38 umgibt das Ankerrohr 36, welches wiederum in ein Joch 39 eingebunden ist. Über elektrische Anschlussleitungen 41 ist die Wegerzeugungseinrichtung ansteuerbar und fassbar.

Der Stößel 35 ist unter Zwischenschaltung einer Rückstellfeder 43 zum Kern 37 bewegbar zum Ankerrohr 36 gelagert, das heißt, dass bei der Bestromung der Spule 38 der Stößel 35 in das Ankerrohr 36 gegen die Federkraft der Rückstellfeder 43 hineingezogen wird und beim Abschalten der Spule 38 die Rückstellfeder 43 den Stößel 35 in eine Schließbewegung überführt sowie den Stößel 35 in einer Schließposition anordnet, wie dies in Figur 1 dargestellt ist. Dabei greift der Schließkörper 33 in die Pilotbohrung 32 des Ventilkolbens 27. Das Ventilschließglied 26 schließt die Durchgangsbohrung 23 und liegt am Ventilsitz 24 an. Der Ventilkolben 27 ist bevorzugt in einer in das Ventilgehäuse 12 einsetzbaren Führungsbuchse 46 geführt. Alternativ kann der Ventilkolben 27 auch unmittelbar an einem Wandabschnitt der zu einer Gehäuseseite 18 hin offenen Kammer 17 geführt sein. Zwischen diesem Wandabschnitt der Führungsbuchse 46 oder der Kammer 17 und dem Ventilkolben 27 ist ein Bypasskanal 48 vorgesehen, wodurch eine Verbindung zwischen der Zugangsöffnung 14 zum Pilotventil 31 geschaffen wird. Nach dem Abheben des Schließkörpers 33 aus der Pilotbohrung 32 kann der Massenstrom durch die Pilotbohrung 32 hindurch in die Durchgangsöffnung 23 strömen, da sich die Pilotbohrung 32 vollständig durch den Ventilkolben 27 bis zum Ventilschließglied 26 erstreckt. Daraufhin hebt der Ventilkolben 27 mit der Unterstützung durch das Federelement 67 von dem Ventilsitz 24 ab.

Das in Figur 1 dargestellte Ventil 11 ist ein sogenanntes NC-Ventil (Normally Closed-Ventil), das heißt, dass bei einer nicht bestromten Spule 38 das Ventil 11 geschlossen ist und einen Durchgang zwischen der Zu- und Abführöffnung 14, 15 gesperrt ist. Bei einem solchen Ventil 11 kommt beispielsweise eine monostabile Wegerzeugungseinrichtung 21 zum Einsatz, die nur eine Position des Stößels 35 hält, solange die Spule 38 bestromt ist.

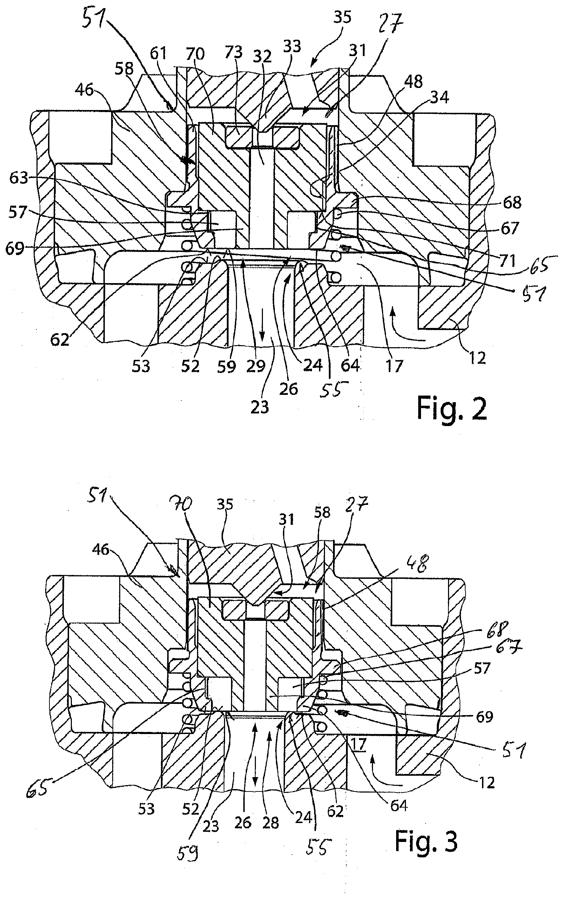

In Figur 2 ist eine schematisch vergrößerte Ansicht einer Ventilanordnung 51 dargestellt. Diese Ventilanordnung 51 ist beispielsweise im Schaltventil 11 gemäß Figur 1 vorgesehen. Die Ventilanordnung 51 umfasst den Ventilsitz 24 und das Ventilschließglied 26. Der Ventilsitz 24 umfasst eine Dichtfläche 52 sowie eine Anschlagfläche 53. Diese Dichtfläche 52 und die Anschlagfläche 53 grenzen bevorzugt aneinander an bzw. gehen ineinander über. Die Dichtfläche 52 umgibt bevorzugt die Durchgangsbohrung 23. Die Anschlagfläche 53 erstreckt sich außerhalb der Dichtfläche 52. An der Dichtfläche 52 ist bevorzugt ein Dichtvorsprung 55 ausgebildet. Dieser Dichtvorsprung 55 beispielsweise ist wulstförmig, halbkreisförmig oder bogensegmentförmig ausgebildet. Dieser Dichtvorsprung 55 steht in axialer Richtung auf das Ventilschließglied 26 gegenüber der Anschlagfläche 53 hervor. Die Dichtfläche 52 und Anschlagfläche 53 sind bevorzugt aus demselben Material ausgebildet, insbesondere sind die Dichtfläche 52 und die Anschlagfläche 53 unmittelbar am Ventilgehäuse 12 angeformt. Alternativ kann auch vorgesehen sein, dass der Ventilsitz 24 als ein Einsetzelement ausgebildet ist, welches am Ventilgehäuse 12 zur Durchgangsbohrung 23 befestigbar ist. Auch kann der Ventilsitz 24 aus separaten Elementen bestehen und zusammengesetzt werden, wobei ein Element die Dichtfläche 52 und ein weiteres Element die Anschlagfläche 53 umfasst. Auch kann nur eines der Elemente - also die Dichtfläche 52 oder die Anschlagfläche 53 - separat ausgebildet sein und mit den weiteren Elementen, welche unmittelbar am Ventilgehäuse 12 angeordnet ist, den Ventilsitz 24 bilden.

Die Durchgangsbohrung 23 weist beispielsweise einen Durchmesser von 1 mm bis 40 mm auf. Der Dichtvorsprung 55 kann gegenüber der benachbarten Anschlagfläche 53 um 0,05 mm bis 0,5 mm hervorstehen.

Der Ventilkolben 27 weist in Richtung auf den Ventilsitz 24 das Ventilschließglied 26 auf. Das Ventilschließglied 26 umfasst eine Abstützfläche 62 und eine Abdichtfläche 59. Diese grenzen bevorzugt aneinander an. Das Ventilschließglied 26 wird gemäß dem Ausführungsbeispiel durch ein Dichtelement 57 und eine Dichthülse 61 gebildet. Durch die Dichthülse 61 ist das Dichtelement 57 zum Ventilkörper 58 des Ventilkolbens 27 fixiert gehalten. Die Dichthülse 61 weist stirnseitig die Abstützfläche 62 auf. Benachbart dazu ist die Abdichtfläche 59 vorgesehen. Diese Abdichtfläche 59 liegt bevorzugt radial innerhalb der Abstützfläche 62. Die Dichtfläche 59 ist bevorzugt stirnseitig zum Ventilsitz weisend am Dichtelement 57 vorgesehen.

Das Dichtelement 57 ist in einem zwischen der Dichthülse 61 und dem Ventilkörper 58 gebildeten Aufnahmeraum 63 positioniert. Die Dichthülse 61 weist stirnseitig einen Ringbund 64 auf, der radial nach innen vorsteht. Das Dichtelement 57 ist bevorzugt gestuft mit zwei unterschiedlichen breiten Querschnitten ausgebildet. Dadurch kann das Dichtelement 57 mit dem kleineren Querschnitt stirnseitig zum Ventilkörper 58 durch den Ringbund 64 fixiert werden. Des Weiteren fixiert der Ringbund 64 in axialer Richtung den größeren Querschnitt des Dichtelements 57 zum Ventilkörper 58. Im Aufnahmeraum 63 ist zwischen dem Dichtelement 57 und der Dichthülse 61 ein Freiraum 65 ausgebildet, sodass sich das Dichtelement 57 mit dem größeren Ringquerschnitt in diesem Bereich radial ausdehnen kann. Das Ventilschließglied 26 weist bevorzugt in einer Ebene liegend die Dichtfläche 59 des Dichtelementes 57 und die Abstützfläche 62 an der Dichthülse 61 auf.

Das Ventilschließglied 26 ist in einer Öffnungsposition zum Ventilsitz 24 dargestellt. Die Öffnungsbewegung des Ventilschließgliedes 26 wird durch das Federelement 67 unterstützt, welches in Richtung auf den Stößel 35 wirkt.

Durch die Dichthülse 61 ist die maximale Öffnungsposition des Ventilschließgliedes 26 begrenzt. Eine radial nach außen weisende Schulter 68 der Dichthülse 61 kann an der Führungsbuchse 46 anliegen. Gegenüberliegend greift das Federelement 67 an der Schulter 68 an und wird teilweise auch durch eine Außenseite des Ringbundes 64 geführt.

Zwischen einem Außenumfang der Dichthülse 61 und der Führungsbuchse 46 ist der Bypasskanal 48 gebildet. Dabei kann vorgesehen sein, dass am Außenumfang der Dichthülse 61 Längsrillen vorgesehen sind und/oder dass in der Führungsbuchse 46 Längsrillen vorgesehen sind. Alternativ kann die Dichthülse 61 am Außenumfang ein oder mehrere Abflachungen aufweisen. Dies weist den Vorteil auf, dass eine radiale Führung der Dichthülse 61 in der Führungsbuchse 46 aufrechterhalten bleibt und dennoch hinreichend Freiraum für das Durchströmen des Mediums von der Kammer 17 zur Pilotbohrung 32 ermöglicht ist.

Die Dichthülse 61 ist bevorzugt auf den Ventilkörper 58 aufgepresst. Bevorzugt wird das Dichtelement 57 auf einem hülsenförmigen Abschnitt 69 des Ventilkörpers 58 aufgesetzt. Darauffolgend wird der Ventilkörper 58 in den Hülsenabschnitt 70 der Dichthülse 61 eingeführt, bis die Ringfläche 71 des Ventilkörpers 58 an einer komplementären Ringfläche in der Dichthülse 61 anliegt. Dadurch wird eine axiale Ausrichtung der Dichthülse 61 zum Ventilkörper 58 erzielt. Gleichzeitig kann dadurch eine ebene stirnseitige Ausbildung des Ventilschließgliedes 26 in Richtung auf den Ventilsitz 24 gegeben sein. Zudem kann der Ringbund 64 in axialer Richtung das Dichtelement 57 kraftschlüssig mit dem Ventilkörper 58 verbinden. Zwischen dem Ventilkörper 58 und der Dichtungshülse 61 wird in einem Bereich, in welchem die Schulter 68 ausgebildet ist, eine Presspassung ausgebildet. Der sich daran anschließende Hülsenabschnitt 70 kann mit einem geringen Spalt zum Ventilkörper 58 ausgebildet bleiben.

Am Ventilkörper 58 ist dem Ventilschließglied 26 gegenüberliegend das Pilotventil 31 ausgebildet. Vorzugsweise ist ein in den Ventilkörper 58 eingesetzter, insbesondere eingepresster, Pilotventilsitz 73 vorgesehen. Dieser besteht bevorzugt aus Polytetrafluorethylen. In der Öffnungsstellung des Ventilschließgliedes 26 schließt der Stößel 35 die Pilotbohrung 32.

Zum Überführen des Ventilschließgliedes 26 aus der Öffnungsposition in die Schließposition wird die Bestromung der Wegerzeugungseinrichtung 21 abgeschalten. Das Rückstellelement 43 drückt den Stößel 35 und somit das Ventilschließglied 26 in Richtung auf den Ventilsitz 24.

In Figur 3 ist eine Schließphase des Ventilkolbens 27 dargestellt. In dieser Schließphase beginnt die Unterbrechung des durch die Durchgangsbohrung 23 hindurchgehenden Strömung. In der dargestellten Schließphase kommt die Abdichtfläche 59 des Dichtelements 57 zur Anlage an der Dichtfläche 52 des Ventilschließgliedes 24, insbesondere mit dem Dichtvorsprung 55.

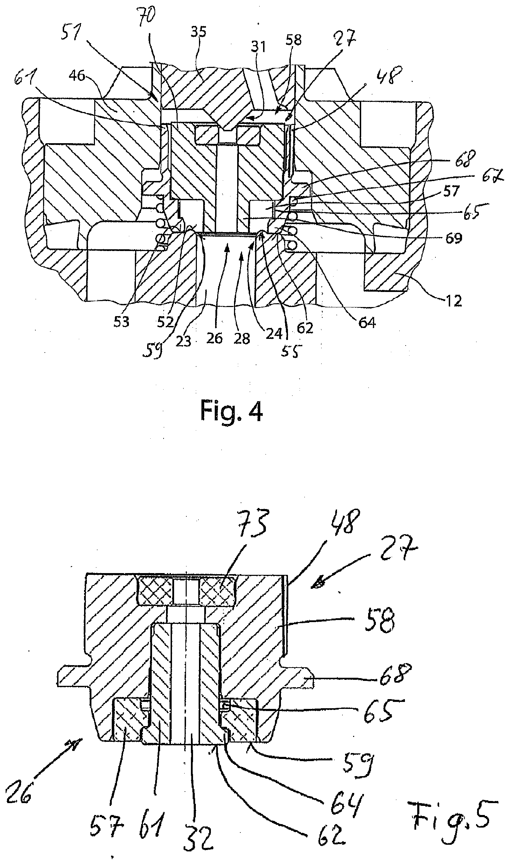

In Figur 4 ist eine schematisch vergrößerte Schnittansicht der Ventilanordnung 51 in der Schließposition des Ventilschließgliedes 26 zum Ventilsitz 24 dargestellt. Die Schließbewegung des Ventilkolbens 27 auf den Ventilsitz 24 ist durch die Abstützfläche 62 begrenzt, welche an der Anschlagfläche 53 des Ventilsitzes 24 anliegt. Dadurch wird ein definierter Formschluss mit einer vorbestimmten Kraft zwischen der Abdichtfläche 62 und der Dichtfläche 52 des Ventilsitzes 24 erzeugt. Bevorzugt verdrängt der Dichtvorsprung 55 ein Volumen im Dichtelement 57 von beispielsweise bis 1 % bis 30 %. Dies genügt für eine abdichtende Anordnung. Gleichzeitig wird ein Quetschen oder Fließen des Dichtelementes beziehungsweise eine dauerhafte Beschädigung verhindert.

In der Schließposition 28 des Ventilschließgliedes 26 zum Ventilsitz 24 ist zwischen der Anschlagfläche 53 des Ventilsitzes 24 und der Abstützfläche 62 des Ventilschließgliedes 26 beziehungsweise der Dichthülse 61 ein Kraftschluss vorgesehen. Zwischen der Dichtfläche 52 des Ventilsitzes 24 und der Abdichtfläche 59 des Dichtelementes 57 ist ein Formschluss gebildet.

Alternativ kann vorgesehen sein, dass der Dichtvorsprung 55 am Dichtelement 57 ausgebildet ist und die Dichtfläche 52 des Ventilsitzes 24 als ebene Fläche wie die Anschlagfläche 53 und vorzugsweise in derselben Ebene ausgebildet ist.

Des Weiteren kann alternativ vorgesehen sein, dass das Dichtelement 57 am Ventilsitz 24 vorgesehen ist, sodass die in den Figuren 2 bis 4 dargestellte Anordnung vertauscht ist.

In Figur 5 ist eine schematisch vergrößerte Schnittansicht einer alternativen nicht zur Erfindung gehörigen Ausführungsform des Ventilschließgliedes 26 zu den Figuren 1 bis 4 dargestellt. Bei der Ausführungsform gemäß den Figuren 1 bis 4 umgreift die Dichthülse 61 zumindest abschnittsweise einen Außenumfang des Ventilkolbens 27 und fixiert das Dichtelement 57 zum Ventilkolben 27.

Bei der Ausführungsform gemäß Figur 5 ist die Dichthülse 61 ebenfalls kraft- und/oder formschlüssig an dem Ventilkolben 27 befestigbar. Dabei ist die Dichthülse 61 im Ventilkolben 27 im Bereich der Pilotbohrung 32 eingesteckt. Die Dichthülse 61 weist eine innere Durchgangsbohrung auf, die einen Teil der Pilotbohrung 32 bildet. Am stirnseitigen Ende der Dichthülse 61 ist ein radial nach außen gerichteter Ringbund 64 vorgesehen. Durch diesen Ringbund 64 wird das Dichtelement 57 zum Ventilkolben 27, insbesondere zum Ventilkörper 58, fixiert gehalten. Dabei ist bevorzugt zwischen dem Dichtelement 57 und der Dichthülse 61 ein Freiraum 65 vorgesehen. Hierbei kann es sich um einen umlaufenden Kanal oder Spalt handeln. Eine Abdichtfläche 59 des Dichtelementes 57 ist gegenüber der Abstützfläche 62 der Dichthülse 61 zurückversetzt. Dadurch kann in Analogie zur vorbeschriebenen Ausführungsform der Ventilanordnung 51 gemäß den Figuren 1 bis 4 eine Wegbegrenzung des Ventilschließgliedes 26 zum Ventilsitz 24 gegeben sein.

Bei dieser Ausführungsform gemäß Figur 5 kann ein Bypasskanal 48 in Form einer Abflachung oder Vertiefung unmittelbar an einem Außenumfang des Ventilkörpers 58 vorgesehen sein. Die Schulter 68 ist bevorzugt einteilig am Ventilkörper 58 vorgesehen. Diese kann auch durch ein separates aufgepresstes Teil ausgebildet sein. Des Weiteren kann am Ventilkörper 58 ebenfalls ein Pilotventilsitz 73 eingebracht sein.

Im Übrigen gelten für diese Ausführungsformen gemäß Figur 5 die vorstehenden Ausführungen und Alternativen gemäß den Figuren 1 bis 4.

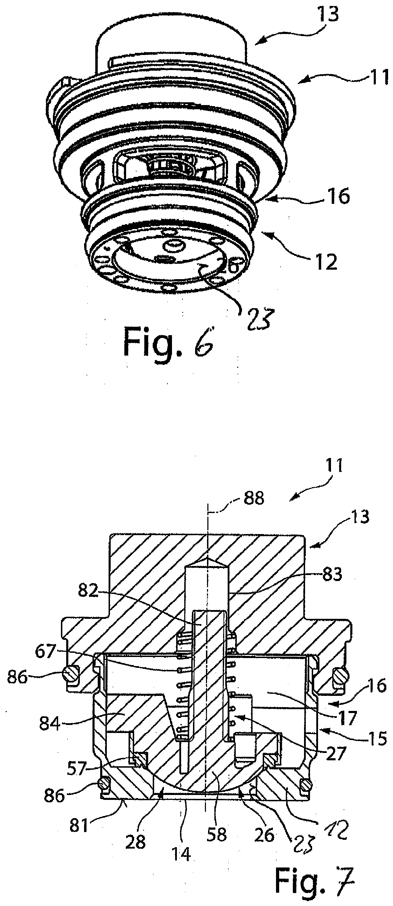

In Figur 6 ist eine perspektivische Ansicht eines nicht zur Erfindung gehörigen Schaltventils 11 in Form eines Rückschlagventils dargestellt. Dieses Rückschlagventil 11 umfasst ein Ventilgehäuse 12 sowie ein Grundgehäuse 13. Das Ventilgehäuse 12 ist zum Grundgehäuse 13 durch eine Schnittstelle 16 verbunden. Dadurch kann das Ventilgehäuse 14 vom Grundgehäuse 13 gelöst werden.

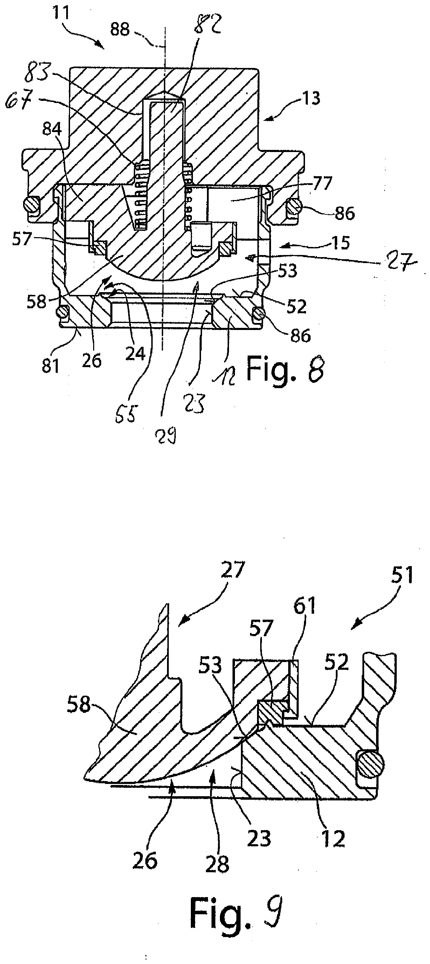

Der Aufbau des Schaltventils 11 geht aus der Schnittansicht gemäß Figur 7 hervor. Diese Schnittansicht zeigt das Schaltventil 11 in einer Schließposition 28. In Figur 8 ist eine schematische Schnittansicht des Schaltventils 11 in einer Öffnungsposition 29 dargestellt.

Das Ventilgehäuse 12 ist vorteilhafterweise einteilig ausgebildet. Dieses besteht beispielsweise aus Kunststoff und weist bevorzugt einen käfigartigen Aufbau auf. An einer Stirnfläche 81 des Ventilgehäuses 12 ist eine Zuführöffnung 14 vorgesehen. In einer radialen Umfangswand des Ventilgehäuses 12 sind eine oder mehrere Abführöffnungen 15 vorgesehen. Dazwischenliegend ist die Durchgangsbohrung 23 angeordnet. Am Ventilgehäuse 12 ist der Ventilkolben 27 mit dem Ventilschließglied 26 vorgesehen. Der Ventilsitz 24 umgibt die Durchgangsbohrung 23. Der Ventilkolben 27 umfasst zumindest einen stabförmigen Führungsabschnitt 82, der in einem Bohrungsabschnitt 83 des Grundgehäuses 13 geführt ist. Ergänzend können Führungslamellen 84 am Ventilkolben 27 vorgesehen sein. Diese Führungslamellen 84 weisen radial nach außen weisende Führungsabschnitte auf, die an einer Innenseite des Ventilgehäuses 12 angreifen und während einer Öffnungs- und Schließbewegung des Ventilkolbens 27 zum Ventilsitz 24 den Ventilkolben 27 in radialer Richtung führen. Zwischen dem Ventilkolben 27 und dem Grundgehäuse 13 ist ein Federelement 67 vorgesehen, durch welches der Ventilkolben 27 in einer Schließposition 28 gehalten ist. In dieser Schließposition 28 liegt das Ventilschließglied 26 im Ventilsitz 24 an und schließt die Durchgangsöffnung 23. An einem Außenumfang des Grundgehäuses 13 und/oder des Ventilgehäuses 12 können Dichtungselemente 86, insbesondere O-Ring-Dichtungen, vorgesehen sein. Dadurch kann eine abdichtende Positionierung des Schaltventils 11 in einer Anschlussstelle zwischen einer Zuführöffnung 14 und einer Abführöffnung 15 vorgesehen sein.

Bei diesem Schaltventil 11 ist beispielsweise vorgesehen, dass in axialer Richtung entlang der Längsachse des Schaltventils 11 ein Medium zugeführt wird und in radialer Richtung über die Abführöffnungen 15 das Medium abgeführt wird.

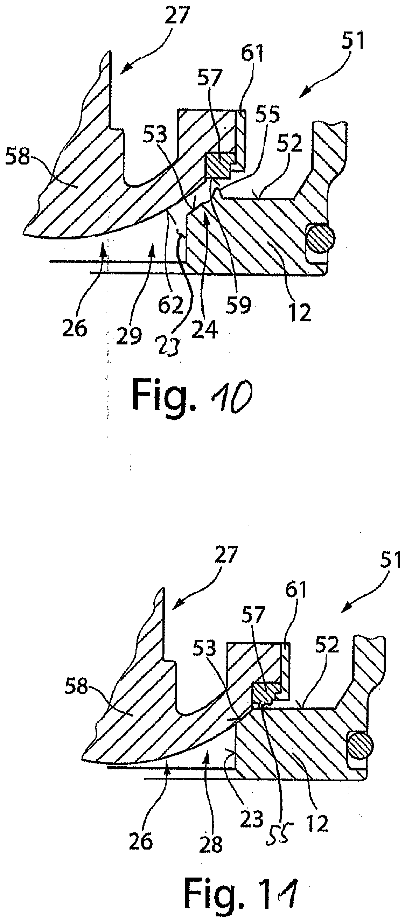

In Figur 9 ist eine schematisch vergrößerte Schnittansicht des Ventilschließgliedes 26 und des Ventilsitzes 24 in einer Schließposition 28 dargestellt. Figur 10 zeigt die Ventilanordnung 51 gemäß Figur 9 in einer Öffnungsposition 29.

Der Aufbau der Ventilanordnung 51 gemäß den Figuren 9 und 10 entspricht dem Aufbau und der Anordnung sowie den Ausführungsformen, welche in den Figuren 2 bis 4 beschrieben sind.

Abweichend ist lediglich, dass beim Ventilsitz 24 die Anschlagfläche 53 der Durchgangsbohrung 23 zugeordnet ist und radial außerhalb zur Anschlagfläche 53 die Dichtfläche 52 vorgesehen ist. Alternativ kann auch eine Vertauschung in Analogie zur Ventilanordnung 51 gemäß den Figuren 2 bis 4 vorgesehen sein.

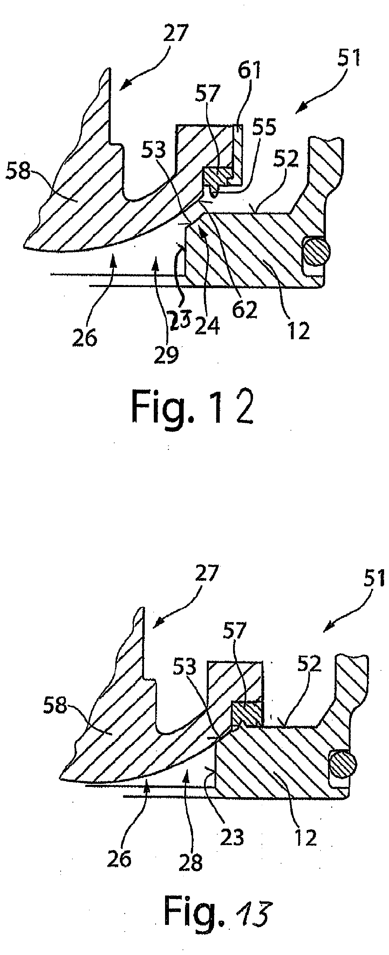

In den Figuren 11 und 12 ist eine alternative nicht zur Erfindung gehörige Ausgestaltung der Ventilanordnung 51 zu den Figuren 9 und 10 dargestellt. Bei dieser alternativen Ausführungsform ist vorgesehen, dass der Dichtvorsprung 55 am Dichtelement 57 vorgesehen ist. Die Dichtfläche 52 kann dadurch als eine Ebene ausgebildet sein.

Die Ausführungsformen gemäß den Figuren 9 bis 12 zeigen des Weiteren, dass die Anschlagfläche 53 zur Dichtfläche 52 am Ventilsitz 24 auch in einem stumpfen Winkel zueinander ausgerichtet sein können. Auch kann bei einem solchen Schaltventil 11 gemäß Figur 6 vorgesehen sein, dass die Dichtfläche 52 und die Anschlagfläche 53 des Ventilsitzes 24 in einer gemeinsamen Ebene, insbesondere radialen Ebene, liegen. Die Abstützfläche 52 und die Abdichtfläche 59 des Ventilschließgliedes 26 sind komplementär dazu ausgebildet.

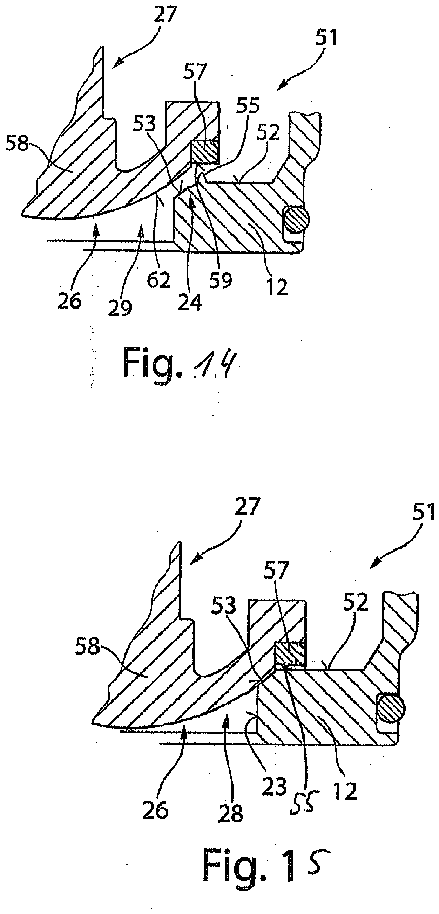

In Figur 13 ist eine schematisch vergrößerte Schnittansicht einer alternativen nicht zur Erfindung gehörigen Ausführungsform des Ventilschließgliedes 26 zu Figur 9 in der Schließposition 28 dargestellt. In Figur 14 ist die alternative Ausführungsform des Ventilschließgliedes 26 gemäß Figur 13 in einer Öffnungsposition 29 dargestellt.

Diese alternative Ausführungsform des Ventilschließgliedes 26 weicht dahingehend von der Ausführungsform gemäß Figur 9 ab, dass eine Dichthülse 61 nicht vorgesehen ist. Vielmehr ist das Ventilschließglied 26 bestehend aus dem Ventilkörper 58 und dem Dichtelement 57 als ein einziges Bauteil ausgebildet, welches als Zwei-Komponenten-Spritzgussteil hergestellt ist. Durch die Hartkomponente wird der Ventilkörper 58 ausgebildet. Die Weichkomponente dient zur Herstellung und Anspritzung des Dichtelements 57 an den Ventilkörper 58. Im Übrigen gelten die Ausführungen zu den Figuren 9 und 10.

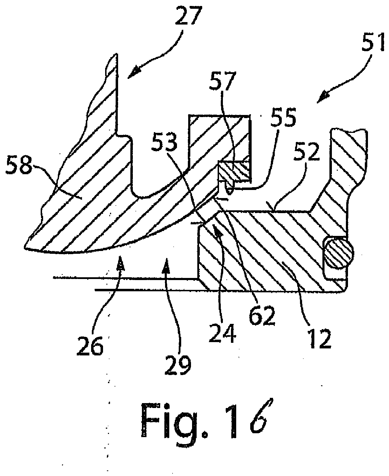

Die Figur 15 zeigt eine alternative Ausführungsform des Ventilschließgliedes 26 zu Figur 13 in der Schließposition 28. Die Figur 16 zeigt schematisch vergrößert das Ventilschließglied 26 gemäß Figur 15 in einer Öffnungsposition 29 zum Ventilsitz 24. Auch bei dieser Ausführungsform ist das Dichtelement 57 und der Ventilkörper 58 als ein Zwei-Komponenten-Spritzgussteil ausgebildet. Die Ausführungsform gemäß den Figuren 15 und 16 weicht von der Ausführungsform gemäß den Figuren 13 und 14 dahingehend ab, dass der Vorsprung 55 an dem Dichtelement 57 angeformt ist. Bei den Ausführungen gemäß den Figuren 13 und 14 ist der Vorsprung 55 benachbart zur Anschlagfläche 53 am Ventilsitz 24 vorgesehen.

## Patentansprüche

1. Ventilanordnung für ein Schaltventil (11) zur Regelung eines Massenstromes in einem Kälte- oder Wärmekreislauf, mit einem Ventilgehäuse (12), welches eine Zuführöffnung (14) und eine Abführöffnung (15) aufweist, mit einem Ventilkolben (27), welcher ein Ventilschließglied (26) aufweist, das in einer Schließposition (28) an einem Ventilsitz (24) an einer Durchgangsbohrung (23) zwischen der Zuführöffnung (14) und der Abführöffnung (15) anliegt und die Durchgangsbohrung (23) schließt, wobei
- der Ventilsitz (24) eine Anschlagfläche (53) und eine Dichtfläche (52) aufweist, die benachbart zueinander ausgerichtet sind,
- das Ventilschließglied (26) eine Abstützfläche (62) und eine Abdichtfläche (59) aufweist, die benachbart zueinander ausgerichtet sind,
- an dem Ventilschließglied (26) ein elastisches Dichtelement (57) vorgesehen ist, an welchem die Abdichtfläche (59) ausgebildet ist,
- an der Dichtfläche (52) ein Dichtvorsprung (55) vorgesehen ist, der zur gegenüberliegenden Abdichtfläche (59) ausgerichtet ist,
- die Abstützfläche (62) des Ventilschließgliedes (26) und die Anschlagfläche (53) des Ventilsitzes (24) in der Schließposition (28) aneinander anliegen und eine Wegbegrenzung zwischen dem Ventilschließglied (26) und Ventilsitz (24) bilden und der Dichtvorsprung (55) in das Dichtelement (57) zumindest teilweise eingepresst ist, **dadurch gekennzeichnet,**
- **dass** der Ventilkolben (27) einen Ventilkörper (58) aufweist, an dem das Dichtelement (57) mit einer Dichthülse (61) befestigt ist und
- **dass** die am Ventilkörper (58) vorgesehene Dichthülse (61) eine radial nach außenstehende Schulter (68) aufweist, an der ein Federelement (67) zwischen dem Ventilsitz (24) und dem Ventilkolben (27) geführt ist.

2. Ventilanordnung nach Anspruch 1, **dadurch gekennzeichnet, dass** an einer Stirnseite der Dichthülse (61) oder an einer zum Ventilsitz (24) weisenden Stirnseite des Ventilkörpers (58) benachbart zum Dichtelement (57) die Abstützfläche (62) vorgesehen ist.

3. Ventilanordnung nach Anspruch 2, **dadurch gekennzeichnet, dass** zwischen dem Ventilkörper (58) und der Dichthülse (61) ein Aufnahmeraum (63) ausgebildet ist und dass das im Aufnahmeraum (63) angeordnete Dichtelement (57) ein Volumen einnimmt, welches kleiner als das Volumen des Aufnahmeraums (63) ist.

4. Ventilanordnung nach einem der Ansprüche 2 oder 3, **dadurch gekennzeichnet, dass** die den Ventilkörper (58) zumindest abschnittsweise außen umgreifende Dichthülse (61) zum Ventilsitz (24) weisend einen radial nach innen vorstehenden Ringbund (64) aufweist, welcher an einem Außenumfang des Dichtelementes (57) angreift und dieses im Aufnahmeraum (63) fixiert, oder dass die im Ventilkörper (58) eingesetzte Dichthülse (61) zum Ventilsitz (24) weisend einen radial nach außen vorstehenden Ringbund (64) aufweist, welcher an einem Innenumfang des Dichtelementes (57) angreift und dieses im Aufnahmeraum (63) fixiert und vorzugsweise das Dichtelement (57) durch den Ringbund (64) der Dichthülse (61) in einer Richtung, vorzugsweise in axialer Richtung zur Längsachse des Ventilkolbens (27), formschlüssig oder kraftschlüssig fixiert gehalten ist und in einer weiteren Richtung, vorzugsweise in radialer Richtung zur Längsachse des Ventilkolbens (27), unter Bildung eines Freiraumes (65) im Aufnahmeraum (63) angeordnet ist.

5. Ventilanordnung nach einem der vorhergehenden Ansprüche, **dadurch gekennzeichnet, dass** die Dichthülse (61) auf den Ventilkörper (58) aufgepresst, aufgeklebt oder nach dem Aufsetzen zumindest teilweise stoffschlüssig verbunden ist.

6. Ventilanordnung nach Anspruch 1, **dadurch gekennzeichnet, dass** das Dichtelement (57) und der Ventilkörper (58) als ein Zwei-Komponenten-Spritzgussteil hergestellt ist oder dass das Dichtelement (57) und der Ventilkörper (58) durch eine Klebe- und/oder Pressverbindung miteinander verbunden sind.

7. Ventilanordnung nach einem der vorhergehenden Ansprüche, **dadurch gekennzeichnet, dass** bei der Anordnung des Dichtvorsprungs (55) am Ventilsitz (24) der Dichtvorsprung (55) in Hubrichtung des Ventilschließgliedes (26) gegenüber der Anschlagfläche (53) des Ventilsitzes (24) hervorsteht oder dass bei der Anordnung des Dichtvorsprunges (55) am Dichtelement (57) der Dichtvorsprung (55) in Hubrichtung des Ventilschließgliedes (26) gegenüber der Abstützfläche (62) hervorsteht und vorzugsweise dass der Dichtvorsprung (55) gegenüber der benachbarten Anschlagfläche (53) oder der benachbarten Abstützfläche (62) mit einer Höhe von 0,05 mm bis 0,5 mm hervorsteht.

8. Ventilanordnung nach einem der vorhergehenden Ansprüche, **dadurch gekennzeichnet, dass** der Dichtvorsprung (55) an der Dichtfläche (52) des Ventilsitzes (24) vorgesehen ist und in der Schließposition (28) des Ventilschließgliedes (26) zum Ventilsitz (24) ein Volumen von 1 % bis 30 % des Dichtelementes (57) verdrängt.

9. Ventilanordnung nach einem der vorhergehenden Ansprüche, **dadurch gekennzeichnet, dass** die Dichtfläche (52) mit dem daran vorgesehenen Dichtvorsprung (55) und die Anschlagfläche (53) einteilig am Ventilgehäuse (12) ausgebildet sind.

10. Ventilanordnung nach einem der vorhergehenden Ansprüche, **dadurch gekennzeichnet, dass** der Ventilsitz (24) die Anschlagfläche (53) und die Dichtfläche (52) umfasst und der Dichtvorsprung (55) an die Durchgangsbohrung (23) angrenzend positioniert ist, wobei die Durchgangsöffnung (23) einen Durchmesser von 1 mm bis 30 mm aufweist.

11. Ventilanordnung nach einem der vorhergehenden Ansprüche, **dadurch gekennzeichnet, dass** der Ventilkolben (27) dem Ventilschließglied (26) gegenüberliegend ein Pilotventil (31) aufweist, welches eine Pilotbohrung (32) im Ventilkolben (27) umfasst, die in die Durchgangsbohrung (23) mündet und eine Wegerzeugungseinrichtung (21) aufweist, welche einen betätigbaren Stößel (35) umfasst, der einen die Pilotbohrung (32) schließenden Schließkörper (33) aufnimmt und mit dem Schließkörper (33) in eine die Pilotbohrung (32) freigebende Öffnungsposition überführbar ist und vorzugsweise einen zwischen der Zuführöffnung (14) und der Pilotbohrung (32) ausgebildeten Bypasskanal (48) aufweist.

12. Ventilanordnung nach einem der Ansprüche 2 bis 11, **dadurch gekennzeichnet, dass** zwischen einem Außenumfang der Dichthülse (61) und einer Führungsbuchse (46) des Stößels (33) ein Bypasskanal (48) durch eine Spielpassung oder zumindest eine am Außenumfang der Dichthülse (61) ausgebildete Abflachung oder zumindest einem am Außenumfang der Dichthülse (61) oder am Innenumfang der Führungsbuchse (46) angeordneten Längskanal gebildet ist und vorzugsweise die Dichthülse (61) und der Ventilkörper (58) im Bereich der radial nach außen abstehenden Schulter (68) miteinander verpresst sind und ein weiterer daran angrenzender Hülsenabschnitt (70) der Dichthülse (61) mit einem Spalt zum Ventilkörper (58) vorgesehen ist.

13. Ventilanordnung nach einem der Ansprüche 2 bis 12, **dadurch gekennzeichnet, dass** am Außenumfang des Ventilkörpers (58) eine Rändelung, insbesondere Längsrändelung, vorgesehen ist, welche im Bereich einer herzustellenden Presspassung mit der Dichthülse (61) vorgesehen ist.

14. Ventilanordnung nach Anspruch 11, **dadurch gekennzeichnet, dass** der Ventilkörper (58) einen zur Pilotbohrung (32) ausgerichteten Pilotventilsitz (73) aus einem Kunststoffmaterial, insbesondere aus Polytetrafluorethylen, aufweist, der als Ring in den Ventilkörper (58) eingepresst ist.

15. Rückschlagventil zur Regelung eines Massenstroms in einem Kälte- oder Wärmekreislauf mit einem Ventilgehäuse (12), welches eine Zuführöffnung (14) und eine Abführöffnung (15) aufweist, mit einem Ventilkolben (27), der ein zur Abführöffnung (15) weisendes Ventilschließglied (26) aufweist, das in einer Schließposition an einem an einem an einer Durchgangsbohrung (23) zwischen der Zuführöffnung (14) und der Abführöffnung (15) angeordneten Ventilsitz (24) anliegt und in dieser Schließposition durch ein Federelement (67) gehalten ist, **dadurch gekennzeichnet, dass** das Rückschlagventil eine Ventilanordnung (51) nach einem oder mehreren der vorhergehenden Ansprüche umfasst.

## Claims

1. Valve arrangement for a switching valve (11) for regulating a mass flow in a refrigerating circuit or a heating circuit, comprising a valve housing (12), which comprises a feed opening (14) and a discharge opening (15), comprising a valve piston (27), which comprises a valve-closing member (26), which buts against a valve seat (24) of a through-hole (23) between the feed opening (14) and the discharge opening (15) in a closed position (28) and closes the through-hole (23), wherein
- the valve seat (24) comprises a stop surface (53) and a sealing surface (52) which are oriented so as to be adjacent to one another,
- the valve-closing member (26) comprises a supporting surface (62) and a gasket surface (59) which are oriented so as to be adjacent to one another,
- an elastic sealing element (57) is provided on the valve-closing member (26), on which a gasket surface (59) is formed,
- a sealing projection (55) is provided on the sealing surface (52) and is oriented towards the opposite gasket surface (59),
- the supporting surface (62) of the valve-closing member (26) and the stop surface (53) of the valve seat (24) but against one another in the closed position (28) and form a travel limitation between the valve-closing member (26) and the valve seat (24), and the sealing projection (55) is at least partially pressed into the sealing element (57), **characterized in**
- **that** the valve piston (27) comprises a valve body (58), on which the sealing element (57) is fixed by a sealing sleeve (61), and
- **that** the sealing sleeve (61) provided on the valve body (58) comprises a radially outwardly protruding shoulder (68), on which a spring element (67) is guided between the valve seat (24) and the valve piston (27).

2. Valve arrangement according to claim 1, **characterized in that** the supporting surface (62) is provided on an end face of the sealing sleeve (61) or on an end face of the valve body (58) facing the valve seat (24) and adjacent to the sealing element (57).

3. Valve arrangement according to claim 2, **characterized in that** a receiving space (63) is formed between the valve body (58) and the sealing sleeve (61), and **in that** the sealing element (57) arranged in the receiving space (63) occupies a volume, which is smaller than the volume of the receiving space (63).

4. Valve arrangement according to any of claims 2 or 3, **characterized in that** the sealing sleeve (61) that surrounds the valve body (58) on the outside at least in part comprises a radially inwardly projecting annular collar (64), pointing towards the valve seat (24), which collar acts on an outer circumference of the sealing element (57) and preferably the outer circumference of the sealing element (57) comprises in a radially peripheral direction at least one interruption or depression and fixes the sealing element (57) in the receiving space (63) in an axial direction, or **in that** the sealing sleeve (61) inserted in the valve body (58) comprises a radially outwardly projecting annular collar (64), pointing towards the valve seat (24), which collar acts on an inner circumference of the sealing element (57) and fixes it in the receiving space (63).

5. Valve arrangement according to one of the preceding claims, **characterized in that** the sealing sleeve (61) is pressed onto the valve body (58), bonded or at least particularly adhesively bonded after placement to the valve body (58).

6. Valve arrangement according to claim 1, **characterized in that** the sealing element (57) and the valve body (58) are produced as a two-component injection-molded part or **in that** the sealing element (57) and the valve body (58) are interconnected by an adhesive bond and/or a press fit.

7. Valve arrangement according to any of the preceding claims, **characterized in that** when the sealing projection (55) is arranged on the valve seat (24), the sealing projection (55) projects in the stroke direction of the valve-closing member (26) relative to the stop surface (53) of the valve seat (24) or the sealing projection (55) projects relative to the adjacent stop surface (53) or the adjacent supporting surface (62) at a height of from 0.05 mm to 0.5 mm.

8. Valve arrangement according to any of the preceding claims, **characterized in that** the sealing projection (55) is provided on the sealing surface (52) of the valve seat (24) and displaces a volume of from 1 % to 30 % of the sealing element (57) towards the valve seat (24) in the closed position (28) of the valve-closing member (26).

9. Valve arrangement according to any of the preceding claims, **characterized in that** the sealing surface (52) together with the sealing projection (55) provided thereon and the stop surface (53) are formed in one piece on the valve housing (12).

10. Valve arrangement according to any of the preceding claims, **characterized in that** the valve seat (24) comprises the stop surface (53) and the sealing surface (52) and the sealing projection (55) is positioned so as to adjoin the through-hole (23), wherein the through-opening (23) has a diameter of from 1 mm to 30 mm.

11. Valve arrangement according to any of the preceding claims, **characterized in that** the valve piston (27) comprises a pilot valve (31) opposite the valve-closing member (26), which pilot valve comprises a pilot hole (32) in the valve piston (27) which opens into the through-hole (23) and comprises a travel-generating device (21), which has an actuatable tappet (35) which receives a closing body (33) that closes the pilot hole (32) and can be transferred into an open position that unblocks the pilot hole (32) with the closing body (33) and preferably comprises a bypass channel (48) formed between the feed opening (14) and the pilot hole (32).

12. Valve arrangement according to claims 2 to 11, **characterized in that** a bypass channel (48) is formed between an outer circumference of the sealing sleeve (61) and a guide bushing (46) of the tappet (33) by a clearance or at least one flattened region formed on the outer circumference of the sealing sleeve (61) or at least one longitudinal channel arranged on the outer circumference of the sealing sleeve (61) or on the inner circumference of the guide bushing (46) and preferably the sealing sleeve (61) and the valve body (58) are pressed together in the region of the radially outwardly protruding shoulder (68) and another sleeve portion (70) of the sealing sleeve (61) adjoining said shoulder is provided with a gap from the valve body (58).

13. Valve arrangement according to any of claims 2 to 12, **characterized in that** knurling, in particular longitudinal knurling, is provided on the outer circumference of the valve body (58), and is provided in the region of the press fit to be produced with the sealing sleeve (61).

14. Valve arrangement according to claim 11, **characterized in that** the valve body (58) comprises a pilot valve seat (73) that is oriented towards the pilot hole (32) and is made of a plastics material, in particular of polytetrafluoroethylene, which is pressed into the valve body (58) in the form of a ring.

15. Non-return valve for regulating a mass flow in a refrigerating circuit or a heating circuit, comprising a valve housing (12), which comprises a feed opening (14) and a discharge opening (15), comprising a valve piston (27), which comprises a valve-closing member (26), which points towards the discharge opening (15), buts against a valve seat (24) arranged on a through-hole (23) between the feed opening (14) and the discharge opening (15) in a closed position and is retained in this closed position by a spring element (67), **characterized in that** the valve seat (24) and the valve-closing member (26) are formed according to a valve arrangement (51) according to one or more of the preceding claims.

## Revendications

1. Système de vanne pour une vanne de commutation (11) destinée à réguler un flux massique dans un circuit frigorifique ou thermique, pourvu d'une cage de vanne (12) qui présente un orifice d'amenée (14) et un orifice d'évacuation (15), pourvu d'un piston de vanne (27) qui présente un organe d'obturation de vanne (26) qui, dans une position de fermeture (28), repose contre un siège de vanne (24) situé au niveau d'un trou de passage (23) entre l'orifice d'amenée (14) et l'orifice d'évacuation (15) et ferme ledit trou de passage (23), dans lequel
- le siège de vanne (24) présente une surface d'arrêt (53) et une surface d'étanchéité (52) qui sont orientées de manière contiguë l'une par rapport à l'autre,
- l'organe d'obturation de vanne (26) présente une surface de support (62) et une surface d'étanchéisation (59) qui sont orientées de manière contiguë l'une par rapport à l'autre,
- sur l'organe d'obturation de vanne (26) est prévu un élément d'étanchéité élastique (57) sur lequel est formée la surface d'étanchéisation (59),
- sur la surface d'étanchéité (52) est prévue une saillie d'étanchéité (55) qui est orientée vers la surface d'étanchéisation (59) située à l'opposé,
- la surface de support (62) de l'organe d'obturation de vanne (26) et la surface d'arrêt (53) du siège de vanne (24) reposent l'une contre l'autre dans la position de fermeture (28) et forment une limitation de course entre l'organe d'obturation de vanne (26) et le siège de vanne (24), et la saillie d'étanchéité (55) est au moins partiellement pressée dans l'élément d'étanchéité (57),
**caractérisé en ce que**
- le piston de vanne (27) présente un corps de vanne (58) sur lequel est fixé l'élément d'étanchéité (57) à l'aide d'une douille d'étanchéité (61) et
- la douille d'étanchéité (61) prévue sur le corps de vanne (58) présente un épaulement (68) faisant saillie radialement vers l'extérieur sur lequel est guidé un élément élastique (67) entre le siège de vanne (24) et le piston de vanne (27).

2. Système de vanne selon la revendication 1, **caractérisé en ce que** la surface de support (62) est prévue, de manière contiguë à l'élément d'étanchéité (57), sur une face frontale de la douille d'étanchéité (61) ou sur une face frontale du corps de vanne (58) qui est tournée vers le siège de vanne (24).

3. Système de vanne selon la revendication 2, **caractérisé en ce qu'**une chambre de réception (63) est formée entre le corps de vanne (58) et la douille d'étanchéité (61) et que l'élément d'étanchéité (57) disposé dans la chambre de réception (63) occupe un volume qui est inférieur au volume de ladite chambre de réception (63).

4. Système de vanne selon l'une quelconque des revendications 2 ou 3, **caractérisé en ce que** la douille d'étanchéité (61) qui enserre par l'extérieur au moins partiellement le corps de vanne (58) présente, tourné vers le siège de vanne (24), un collet annulaire (64) faisant saillie radialement vers l'intérieur qui prend appui contre une circonférence extérieure de l'élément d'étanchéité (57) et fixe celui-ci dans la chambre de réception (63), ou **en ce que** la douille d'étanchéité (61) insérée dans le corps de vanne (58) présente, tourné vers le siège de vanne (24), un collet annulaire (64) faisant saillie radialement vers l'extérieur qui prend appui contre une circonférence intérieure de l'élément d'étanchéité (57) et fixe celui-ci dans la chambre de réception (63) et que de préférence l'élément d'étanchéité (57) est maintenu fixé par conjugaison de formes ou par conjugaison de forces dans une direction donnée, de préférence en direction axiale par rapport à l'axe longitudinal du piston de vanne (27), grâce au collet annulaire (64) de la douille d'étanchéité (61), et est disposé dans la chambre de réception (63) dans une autre direction, de préférence en direction radiale par rapport à l'axe longitudinal du piston de vanne (27), de manière à former un espace libre (65).

5. Système de vanne selon l'une quelconque des revendications précédentes, **caractérisé en ce que** la douille d'étanchéité (61) est assemblée sur le corps de vanne (58) par pressage ou par collage ou est, après sa mise en place, assemblée au moins partiellement par conjugaison de matières.

6. Système de vanne selon la revendication 1, **caractérisé en ce que** l'élément d'étanchéité (57) et le corps de vanne (58) sont réalisés en tant que pièce à deux composants moulée par injection ou que l'élément d'étanchéité (57) et le corps de vanne (58) sont assemblés l'un à l'autre par collage et/ou par pressage.

7. Système de vanne selon l'une quelconque des revendications précédentes, **caractérisé en ce que** lors de la disposition de la saillie d'étanchéité (55) sur le siège de vanne (24), la saillie d'étanchéité (55) fait saillie par rapport à la surface d'arrêt (53) du siège de vanne (24) dans le sens de course de l'organe d'obturation de vanne (26), ou **en ce que** lors de la disposition de la saillie d'étanchéité (55) sur l'élément d'étanchéité (57), la saillie d'étanchéité (55) fait saillie par rapport à la surface de support (62) dans le sens de course de l'organe d'obturation de vanne (26), et **en ce que** de préférence la saillie d'étanchéité (55) fait saillie par rapport à la surface d'arrêt (53) voisine ou à la surface de support (62) voisine selon une hauteur comprise entre 0,05 mm et 0,5 mm.

8. Système de vanne selon l'une quelconque des revendications précédentes, **caractérisé en ce que** la saillie d'étanchéité (55) est prévue sur la surface d'étanchéité (52) du siège de vanne (24) et déplace, lorsque l'organe d'obturation de vanne (26) se trouve dans la position de fermeture (28) par rapport au siège de vanne (24), un volume compris entre 1 % et 30 % de l'élément d'étanchéité (57).

9. Système de vanne selon l'une quelconque des revendications précédentes, **caractérisé en ce que** la surface d'étanchéité (52) pourvue de la saillie d'étanchéité (55) prévue sur celle-ci et la surface d'arrêt (53) sont réalisées de manière monobloc sur la cage de vanne (12).

10. Système de vanne selon l'une quelconque des revendications précédentes, **caractérisé en ce que** le siège de vanne (24) comprend la surface d'arrêt (53) et la surface d'étanchéité (52) et que la saillie d'étanchéité (55) est positionnée de manière contiguë au trou de passage (23), le trou de passage (23) présentant un diamètre compris entre 1 mm et 30 mm.

11. Système de vanne selon l'une quelconque des revendications précédentes, **caractérisé en ce que** le piston de vanne (27) présente, à l'opposé de l'organe d'obturation de vanne (26), une vanne pilote (31) laquelle comprend, dans le piston de vanne (27), un orifice pilote (32) qui débouche dans le trou de passage (23), et laquelle présente un dispositif de génération de course (21) qui comprend une tige actionnable (35) qui reçoit un élément de fermeture (33) qui obture l'orifice pilote (32) et peut passer, conjointement avec le l'élément de fermeture (33), dans une position d'ouverture qui libère ledit orifice pilote (32), et laquelle présente de préférence un canal de dérivation (48) formé entre l'orifice d'amenée (14) et l'orifice pilote (32).

12. Système de vanne selon l'une quelconque des revendications 2 à 11, **caractérisé en ce qu'**un canal de dérivation (48) est formé entre une circonférence extérieure de la douille d'étanchéité (61) et une boîte de guidage (46) de la tige (33) par un ajustement avec jeu ou par au moins un aplatissement formé sur la circonférence extérieure de la douille d'étanchéité (61) ou par au moins un canal longitudinal disposé sur la circonférence extérieure de la douille d'étanchéité (61) ou sur la circonférence intérieure de la boîte de guidage (46) et **en ce que** la douille d'étanchéité (61) et le corps de vanne (58) sont de préférence assemblés l'un à l'autre par pressage dans la zone de l'épaulement (68) faisant saillie radialement vers l'extérieur et **en ce qu'**une autre partie de douille (70) de la douille d'étanchéité (61) qui est contiguë à celle-ci est prévue de manière à former une fente par rapport au corps de vanne (58).

13. Système de vanne selon l'une quelconque des revendications 2 à 12, **caractérisé en ce que** sur la circonférence extérieure du corps de vanne (58) est prévu un moletage, en particulier un moletage longitudinal, qui est prévu dans la zone d'un ajustement serré à réaliser avec la douille d'étanchéité (61).

14. Système de vanne selon la revendication 11, **caractérisé en ce que** le corps de vanne (58) présente un siège de vanne pilote (73) orienté vers l'orifice pilote (32) qui est réalisé en une matière plastique, en particulier en polytétrafluoréthylène, et qui est pressé, en tant qu'anneau, dans ledit corps de vanne (58).

15. Vanne anti-retour destinée à réguler un flux massique dans un circuit frigorifique ou thermique, pourvue d'une cage de vanne (12) qui présente un orifice d'amenée (14) et un orifice d'évacuation (15), pourvue d'un piston de vanne (27) qui présente un organe d'obturation de vanne (26) tourné vers l'orifice d'évacuation (15) qui, dans une position de fermeture, repose contre un siège de vanne (24) disposé au niveau d'un trou de passage (23) entre l'orifice d'amenée (14) et l'orifice d'évacuation (15) et qui est maintenu dans ladite position de fermeture par un élément élastique (67), **caractérisée en ce que** la vanne anti-retour comprend un système de vanne (51) selon l'une ou plusieurs des revendications précédentes.
